# EUROPEAN PATENT SPECIFICATION

(11) **EP 2 497 023 B1**
(45) Date of publication and mention of the grant of the patent: **25.02.2015**
(21) Application number: 09850993.8
(22) Date of filing: 02.11.2009
(51) Int. Cl.: G06F 9/46, G06F 13/12, G06F 13/14, H04L 29/06, G06F 9/00

(54) **MULTIPROCESSING COMPUTING WITH DISTRIBUTED EMBEDDED SWITCHING**
MULTIPROZESSOR-DATENVERARBEITUNG MIT VERTEILTER EINGEBETTETER SCHALTUNG
CALCUL MULTITRAITEMENTS AVEC COMMUTATION INCORPORÉE RÉPARTIE

(43) Date of publication of application: 12.09.2012
(73) Proprietor: Hewlett Packard Development Company, L.P., Houston, Texas 77070 (US)
(72) Inventor: KRAUSE, Michael, Boulder Creek, California 95006 (US)
(74) Representative: Hutchinson, Glenn Stanley
(86) International application number: PCT/US2009/062935
(87) International publication number: WO 2011/053330

(56) References cited:
- WO-A1-99/00944
- US-A1- 2006 104 268
- US-B1- 6 785 734
- US-B1- 6 990 121
- US-B2- 7 209 991
- YE T. ET AL: 'Packetization and routing analysis of on-chip multiprocessor net works' JOURNAL OF SYSTEMS ARCHITECTURE vol. 50, no. 2-3, 01 February 2004, pages 81 - 104, XP004492174

## Description

### BACKGROUND

A multiprocessing computer system is computer system that has multiple central processing units (CPUs). A multiprocessing computer system typically has a large number of embedded processing elements, including processors, shared memory, high-speed devices (e.g., host cache memory and graphics controllers), and on-chip integrated peripheral input output (I O) components (e.g., network interface controller, universal serial bus ports, flash memory, and audio devices). A crossbar switch typically is used to link and arbitrate accesses by the processors to the other embedded processing elements. Physical constraints limit the number of connections that can be made with a crossbar switch. Although multiple crossbar switches have been used to increase the number of connections, such arrangements typically are complicated to design and increase the number of components in the multiprocessing computer system.

What are needed are needed are improved systems and methods for handling communications in multiprocessing computer systems.

US 6,990,121 describes a method and apparatus for switching data of different protocols through a network.

### DESCRIPTION OF DRAWINGS

FIG. 1 is a block diagram of a plurality of embedded processing elements of an embodiment of a multiprocessing computer system.
FIG. 2 is a flow diagram of an embodiment of a method implemented by an embedded processing element of a multiprocessing computer system in accordance with an embodiment of the invention.
FIG. 3 is a block diagram of an embodiment of a multiprocessing computer system that includes host CPUs with respective host interfaces configured to operate as subcomponents of a distributed embedded switch.
FIG. 4 is a block diagram of an embodiment of a CPU with multiple embedded processing elements configured to respectively operate as subcomponents of a distributed embedded switch.
FIG. 5 is a block diagram of an embodiment of a routing engine.
FIG. 6 is a diagrammatic view of an embodiment of a delivery packet.
FIG. 7 is a diagrammatic view of elements of the delivery packet of FIG. 5.
FIG. 8 is a block diagram of an embodiment of a pair of embedded processing elements of a computer system exchanging delivery packets and PCIe packets through a tunneled link.
FIG. 9 is a flow diagram of an embodiment of a method by which an embedded processing element processes a transaction in accordance with an embodiment of the invention.
FIG. 10 is a flow diagram of an embodiment of a method by which an embedded processing element processes a transaction in accordance with an embodiment of the invention.
FIG. 11 is a flow diagram of an embodiment of a method by which an embedded processing element processes a delivery packet in accordance with an embodiment of the invention.
FIG. 12 is a block diagram of an embodiment of a multiprocessor computer system in accordance with an embodiment of the invention.
FIG. 13 is a block diagram of an embodiment of a multiprocessor computer system in accordance with an embodiment of the invention.

### DETAILED DESCRIPTION

In the following description, like reference numbers are used to identify like elements. Furthermore, the drawings are intended to illustrate major features of exemplary embodiments in a diagrammatic manner. The drawings are not intended to depict every feature of actual embodiments nor relative dimensions of the depicted elements, and are not drawn to scale.

### I. DEFINITION OF TERMS

A "computer" is any machine, device, or apparatus that processes data according to computer-readable instructions that are stored on a computer-readable medium either temporarily or permanently. A "computer operating system" is a software component of a computer system that manages and coordinates the performance of tasks and the sharing of computing and hardware resources. A "software application" (also referred to as software, an application, computer software, a computer application, a program, and a computer program) is a set of instructions that a computer can interpret and execute to perform one or more specific tasks. A "data file" is a block of information that durably stores data for use by a software application.

A central processing unit (CPU) is an electronic circuit that can execute a software application. A CPU can include one or more processors (or processing cores). A "host CPU" is a CPU that controls or provides services for other devices, including I/O devices and other peripheral devices.

The term "processor" refers to an electronic circuit, usually on a single chip, which performs operations including but not limited to data processing operations, control operations, or both data processing operations and control operations.

An "embedded processing element" is an integral component of a multiprocessing computer system that is capable of processing data. Examples of embedded processing elements include processors, host interface elements (e.g., memory controllers and I/O hub controllers), integrated high-speed devices (e.g., graphics controllers), and on-chip integrated peripheral input/output (I/O) components (e.g., network interface controller, universal serial bus ports, flash memory, and audio devices).

The term "machine-readable medium" refers to any physical medium capable carrying information that is readable by a machine (e.g., a computer). Storage devices suitable for tangibly embodying these instructions and data include, but are not limited to, all forms of non-volatile computer-readable memory, including, for example, semiconductor memory devices, such as EPROM, EEPROM, and Flash memory devices, magnetic disks such as internal hard disks and removable hard disks, magneto-optical disks, DVD-ROM/RAM, and CD-ROM/RAM.

"Host cache memory" refers to high-speed memory that stores copies of data from the main memory for reduced latency access by the CPU. The host cache memory may be a single memory or a distributed memory. For example, a host cache memory may exist in one or more of the following places: on the CPU chip; in front of the memory controller; and within an I/O hub. All of these caches may be coherently maintained and used as sources/destinations of DMA operations.

An "endpoint" is an interface that is exposed by a communicating entity on one end of a communication link.

An "end point device" is a physical hardware entity on one end of a communication link.

An "I/O device" is a physical hardware entity that is connected to a host CPU, but is separate and discrete from the host CPU or the I/O hub. An I/O device may or may not be located on the same circuit board as the host CPU or the I/O hub. An I/O device may or may not be located on the same hardware die or package as the host CPU or the I/O hub.

A "packet" and a "transaction" are used synonymously herein to refer to a unit of data formatted in accordance with a data transmission protocol and transmitted from a source to a destination. A packet/transaction typically includes a header, a payload, and error control information.

As used herein, the term "includes" means includes but not limited to, and the term "including" means including but not limited to. The term "based on" means based at least in part on.

### II. INTRODUCTION

The embodiments that are described herein provide improved systems and methods for handling communications across multiprocessing chip fabrics that enable platform design to be simplified, platform development cost and time to market to be reduced, and software and hardware reuse to be increased for improved flexibility, scale, and increased functionality. In these embodiments, embedded processing elements implement a dynamically reconfigurable distributed switch for routing transactions. In this way, external switches (e.g., crossbar switches and bus architectures) are not needed. Some of these embodiments leverage an encapsulation protocol that encapsulates standard and proprietary protocols without regard to the coherency of the protocols. In this way, the embedded processing elements can route transactions for different coherency domains, coherent protocol transactions (e.g., shared memory transactions), and non-coherent protocol transactions (e.g., I/O transactions) all on the same links.

### III. OVERVIEW

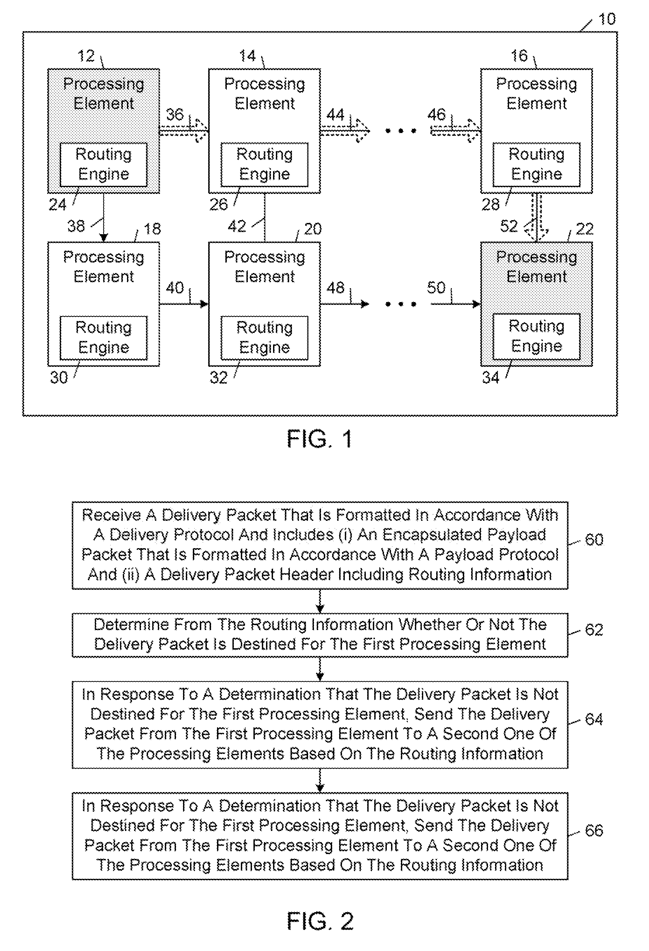

FIG. 1 shows a multiprocessing computer system 10 that includes a plurality of embedded processing elements 12, 14, 16, 18, 20, 22, each of which includes a respective routing engine 24, 26, 28, 30, 32, 34. Adjacent ones of the embedded processing elements 12-22 are connected directly by respective links 36, 38, 40, 42, 44, 46, 48, 50, 52.

In operation, the routing engines 24-34 operate as sub-components of a dynamically reconfigurable distributed switch that is able to route packets from a embedded source processing element to a embedded destination processing over a variety of different paths through the links 36-52. For example, FIG. 1 shows two exemplary packet routing paths from the embedded processing element 12 to the embedded processing element 22. The first packet routing path (which is indicated by the solid line arrows) traverses the embedded processing elements 12, 18, 20, and 22 over links 38, 40, 48, and 50. The second routing path (which is indicated by the dashed line arrows) traverses the embedded processing elements 12, 14, 16, and 22 over links 36, 44, 46, and 52. Other packet routing paths through the embedded processing elements 12-22 are possible. Thus, packets can be routed between any two of the embedded processing elements 12-22 without requiring any additional hardware, such as a crossbar switch chip, bus, or other interconnect.

FIG. 2 shows an embodiment of a method by which each of the embedded processing elements 12-22 of the multiprocessing computer system 10 operates as an embedded sub-component of a distributed switch. This method is described in the context of a first one of the embedded processing elements 12-22 receiving a delivery packet and determining whether to consume the delivery packet or to send it to a second one of the embedded processing elements 12-22. The first and second embedded processing elements may be intermediate nodes or destination nodes on the routing path for the delivery packet.

In accordance with the method of FIG. 2, the first embedded processing element receives a delivery packet that is formatted in accordance with a delivery protocol and includes (i) an encapsulated payload packet that is formatted in accordance with a payload protocol and (ii) a delivery packet header including routing information (FIG. 2, block 60). The first embedded processing element determines from the routing information whether or not the delivery packet is destined for the first embedded processing element (i.e., itself) (FIG. 2, block 62). In response to a determination that the delivery packet is not destined for the first embedded processing element, the first embedded processing element sends the delivery packet from the first embedded processing element to a second one of the embedded processing elements based on the routing information (FIG. 2, block 64). In this process, the first embedded processing element may determine the next hop address corresponding to the second embedded processing element directly from the routing information or by using the routing information as an input into a routing decision function into a routing table that is associated with the first embedded processing element, depending on whether source-based routing or identifier-based routing is used. In response to a determination that the delivery packet is destined for the first embedded processing element, the first embedded processing element decapsulates the payload packet from the delivery packet, and processes the decapsulated payload packet (FIG. 2, block 66).

In some embodiments, the routing decision function applies the routing information into an index into the routing table. In other embodiments, the routing decision function processes the routing information with a function (e.g., *f*(Identifier, QoS value, egress port load for 1 of N possible egress ports, ...) that produces an output value, which is applied to the routing table. In some embodiments, the information from the header is taken in conjunction with information from the computer system hardware to determine an optimal egress port and then enqueue on the appropriate transmission queue of which there may be one or more depending upon how traffic is differentiated.

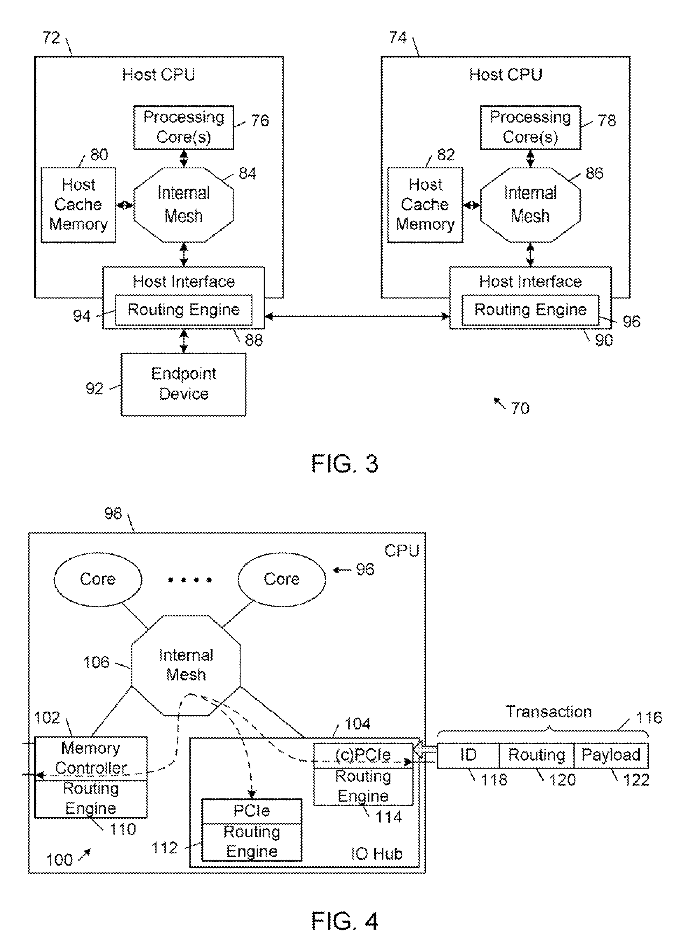

FIG. 3 shows an embodiment 70 of the multiprocessing computer system 10 that includes two host CPUs 72, 74. Each of the host CPUs 72, 74 includes one or more processing cores 76, 78, a respective host cache memory 80, 82, a respective internal mesh 84, 86, and a respective host interface 88, 90.

The embedded host interfaces 88, 90 interconnect the host CPU 72 and the host CPU 74. The host interface 88 also connects the host CPU 72 and the host CPU 74 to the endpoint device 92. Each of the embedded host interfaces 88, 90 includes a respective routing engine 94, 96 that is configured to operate as an embedded sub-component of a distributed switch, as described above. Each of the host interfaces 88, 90 may be implemented by a variety of different interconnection mechanisms.

Each of the internal meshes 84, 86 consists of a respective set of direct interconnections between the respective embedded components of the host CPUs 72, 74 (i.e., processing cores 76, 78, host cache memories 80, 82, and host interfaces 88, 90). The internal meshes 84, 86 may be implemented by any of a variety direct interconnection technologies. Since the embedded routing engines 94, 96 are able to route packets between these embedded components, there is no need for the internal meshes 84, 86 to be implemented by discrete switching components, such as crossbar switches and bus architectures. Instead, delivery packets are sent from sending ones of the processing elements to the recipient ones of the processing elements on links that directly connect respective pairs of the processing elements without any intervening discrete devices.

FIG. 4 shows an exemplary embodiment 98 of the host CPU 72 that includes an embodiment 100 of the host interface 88 that has an embedded memory controller hub 102 and an embedded I/O controller hub 104 that are linked by an embodiment 106 of the internal mesh 84.

The memory controller hub 102 connects the host CPU 98 to the memory components of the computer system 70 via respective coherent interconnects (e.g., a front side bus or a serial interconnect) that are used to exchange information via a coherency protocol.

The I/O controller hub 104 connects the memory controller hub 102 to lower speed devices, including peripheral I/O devices such as the endpoint device 92. In general the peripheral I/O devices communicate with the I/O controller hub 104 in accordance with a peripheral bus protocol. Some of the peripheral devices may communicate with the I/O controller hub in accordance with a standard peripheral communication protocol, such as the PCI communication protocol, the PCIe communication protocol, and the converged (c)PCle protocol. The peripheral bus protocols typically are multilayer communication protocols that include transaction, routing, link and physical layers. The transaction layer typically includes various protocol engines that form, order, and process packets having system interconnect headers. Exemplary types of transaction layer protocol engines include a coherence engine, an interrupt engine, and an I/O engine. The packets are provided to a routing layer that routes the packets from a source to a destination using, for example, destination-based routing based on routing tables within the routing layer. The routing layer passes the packets to a link layer. The link layer reliably transfers data and provides flow control between two directly connected agents. The link layer also enables a physical channel between the devices to be virtualized (e.g., into multiple message classes and virtual networks), which allows the physical channel to be multiplexed among multiple virtual channels. The physical layer transfers information between the two directly connected agents via, for example, a point-to-point interconnect.

The routing engines 110, 112, 114 in the embedded processing elements 102, 104 of the host CPU 98 are able to route transactions 116 (also referred to as packets) between the embedded components of the host CPU 98 and other host CPUs of the multiprocessing computer system 70 in accordance with a delivery protocol. In the embodiment illustrated in FIG. 4, the delivery protocol transaction 116 includes an identifier (ID) 118 that identifies the delivery protocol, routing information 120, and a payload 122 that includes the encapsulated payload protocol packet (e.g., a PCle packet or a (c)PCle packet or a coherent protocol transaction).

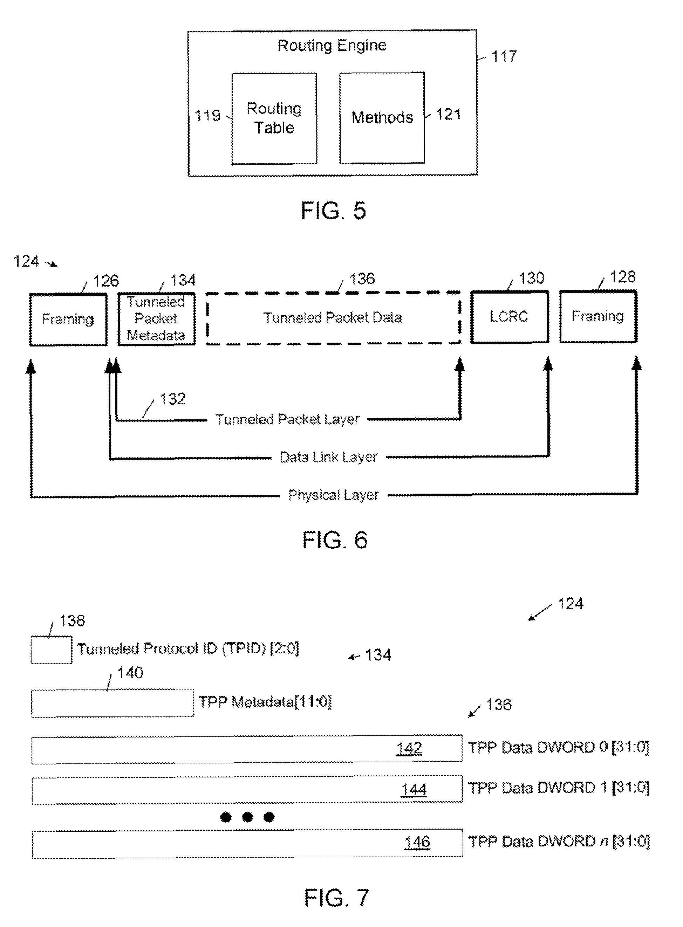

FIG. 5 shows an embodiment 117 of the routing engines 24-34 that includes include a respective routing table 119 and methods 121 for routing packets between the embedded processing elements 12-22. The routing table 119 and methods 121 are programmable by software to route packets in accordance with a specified routing protocol (e.g., identifier-based routing or source-based routing). The software enumerates distributed switch capable components of the multiprocessor computer system 10. The software also configures and enables the routing engines by setting and managing routing engine policies, heuristics, and transaction "filters" that are used by the routing engine to determine whether or not to use the delivery protocol for a given packet. A range of different filter schemes can be defined. For example, in some embodiments the filtering is performed on memory address ranges (e.g., physical, virtual, and space ID memory address ranges), which may be configured to target specific hardware (e.g., a PCle routing component, a memory controller, or another processor). In other embodiments, the filtering is performed on attributes of the transactions (e.g., coherency domain ID, protection key, virtual machine identifier, or proprietary attributes). Quality of service (QoS) may be determined at the source of the transaction packet, or it may be embedded in the delivery protocol and used as an opaque input into an arbitration process that is executed by a routing engine of an intermediate embedded processing component on the path to the destination.

Some embodiments of the routing engine 117 route transactions in accordance with a delivery protocol that encapsulates all types of data transmission protocols, including standard and proprietary protocols, without regard to the coherency of the protocols. In this way, the embedded switching elements can route transactions between different coherency domains and can route coherent protocol transactions (e.g., shared memory transactions) and non-coherent protocol transactions (e.g., I/O transactions) on the same links.

FIG. 6 shows the flow through of an exemplary embodiment 124 of a packet 116 that is formatted in accordance with an embodiment of the delivery protocol that is referred to herein as a "Tunnel Protocol," which is an exemplary delivery protocol that corresponds to an augmented version of the PCle protocol, (see, e.g., PCI-Express™ Base Specification version 2.0, Dec. 20, 2006, the entirety of which is incorporated herein by reference). The flow through of the Tunnelled Protocol Packet (TPP) 124 includes physical layer framing 126 and 128, a data link layer cyclic redundancy check code (LCRC) 130, and a tunneled packet layer 132 that includes tunneled packet metadata 134 and tunneled packet data 136. TPPs are similar to PCIe transaction layer packets (TLPs). The differences between the TPP flow through and the PCle Packet flow through are:
- Tunneled Protocol Packets use a protocol specific Tunneled Protocol Layer instead of the PCle Transaction Layer.
- Tunneled Packets use a simplified Data Link Layer. The packet integrity portion of the Data Link Layer is unchanged (LCRC processing). The reliability and flow control aspects of the Data Link Layer are removed (the Sequence Number field is repurposed as Tunneled Packet Metadata).
- The Physical Layer is slightly modified to provide a mechanism to identify Tunneled Protocol Packets.

FIG. 7 shows the Tunneled Packet Layer elements of the Tunneled Protocol Packet (TPP) 124. The TPP includes a Tunneled Protocol ID field 138, a TPP Metadata field 140, and multiple TPP Data DWORD fields 142, 144, 146. The Tunneled Protocol ID field 138 is a 3 bit field that identifies which tunnel is associated with a Tunneled Packet. For example, the Tunneled Protocol ID field may be encoded with a value that identifies any one of the following protocols: PCI; PCIe; QPI; HyperTransport; and the Tunnel Protocol. In the illustrated embodiment, the Tunneled Protocol ID values are between 1 and 7 (inclusive). The TPP Metadata field 140 is a 12 bit field that provides information about the TPP 124. Definition of this field is tunnel specific. A TPP consists of an integral number of DWORDs of TPP Data that are entered into the TPP Data DWORD fields 142, 144, 146. Layout and usage of these DWORDs is tunnel specific. A TPP need not have any TPP Data and may consist only of TPID and TPP Metadata.

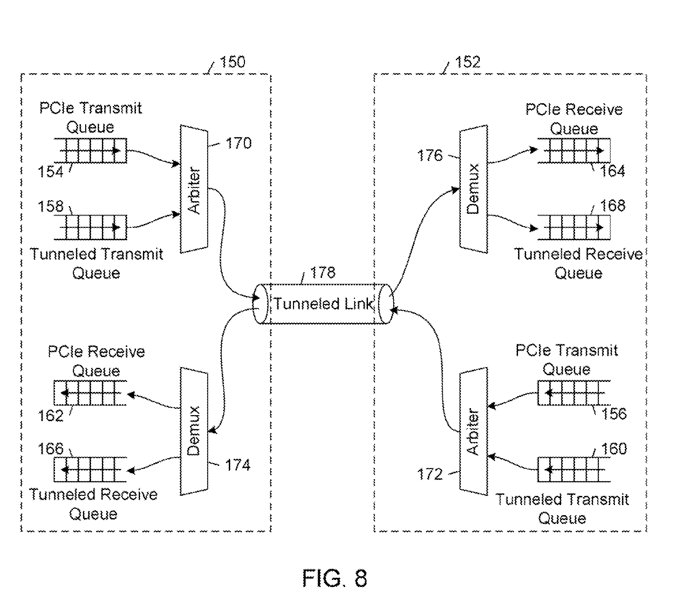

FIG. 8 is a block diagram of an embodiment of an exemplary mechanism by which TPPs tunnel from one distributed switch enabled embedded processing element 150 to another distributed switch enabled embedded processing element 152. In this embodiment, each embedded processing element 150 includes a respective PCle transmit queue 154, 156, a respective tunnelled packet transmit queue 158, 160, a respective PCIe Receive queue 162, 164, a respective tunneled packet receive queue 166, 168, a respective arbiter 170, 172, and a respective demultiplexer 174, 176. In operation, the arbiters 170, 172 arbitrate transmission of PCle packets and TPP packets arriving in the transmit queues 154, 158 and 156, 160 over a tunneled link 178. The demultiplexers 174, 176 demultiplex the received PCle and TPP packets to the appropriate receive queues 162, 166 and 164, 168. Among the attributes of the Tunneled Protocol mechanism are the following:
- Tunneling support is optional normative.
- Tunneling has no impact on PCle components that do not support tunneling.
- Tunneling has no impact on PCle TLPs and DLLPs, even when tunneling is enabled.
- A Link may be used for both TLPs and Tunneled Protocol Packets (TPPs) at the same time.
- Tunneling does not consume or interfere with PCIe resources (sequence numbers, credits, etc.). Tunneled Protocol Packets (TPPs) use distinct resources associated with the tunnel.
- Tunneling is disabled by default and is enabled by software. TPPs may not be sent until enabled by software. TPPs received at Ports that support tunneling are ignored until tunneling is enabled by software.
- Tunneling is selectable on a per-Link basis. Tunneling may be used on any collection of Links in a system.
- A Tunneled Link may support up to 7 tunnels. Software configures the protocol used on each tunnel.
- TPPs contain an LCRC. This is used to provide data resiliency in a similar fashion as PCle TLPs.
- TPPs do not use the ACK/NAK mechanism of PCle. Tunneled Protocol specific acknowledgement mechanisms can be used to provide reliable delivery when needed.
- TPPs do not contain a sequence number, instead, they contain a 12 bit TPP Metadata field that is available for protocol specific use.
- TPP transmitters contain an arbitration/QoS mechanism for scheduling sending of TPPs, TLPs and DLLPs.
- The Tunnelled Protocol mechanism does not define any addressing or routing mechanism for TPPs.

The Tunnel Protocol described above may be adapted for non-PCIe communications protocols. For example, a similar encapsulation protocol may be developed on top of QPI, cHT, and Ethernet.

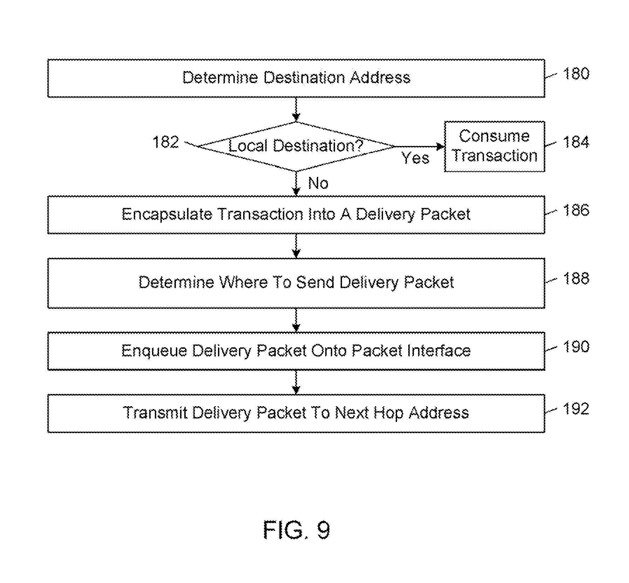

FIG. 9 is a flow diagram of an embodiment of a method by which an embedded processing element processes a transaction when operating as a source of a delivery packet (i.e., an embedded source processing element).

In response to receipt of a transaction, the embedded source processing element determines the destination address of the transaction (FIG. 9, block 180). If the destination address corresponds to an address that is local to the embedded source processing element (FIG. 9, block 182), the embedded source processing element consumes the transaction (FIG. 9, block 184). If the destination address does not correspond to an address that is local to the embedded source processing element (FIG. 9, block 182), the embedded source processing element encapsulates the transaction into a delivery packet (FIG. 9, block 186).

The embedded source processing element determines where to send the delivery packet (FIG. 9, block 188). In ID-based routing embodiments, the embedded source processing element applies the destination address as an input into a routing decision function, e.g., it may act as a simple index into a routing table, that is associated with the embedded source processing element to obtain a next hop address corresponding to another embedded processing element, which may be either a destination node or an intermediate node. The embedded source processing element encodes the next hop address into the delivery packet header. In source-based routing embodiments, the embedded source processing element determines from the associated routing table routing information that includes a specification of a transmission route for the transmitting the delivery packet across connected ones of the embedded processing elements from the source node to the destination node. The embedded source processing element encodes the routing information into the delivery packet header, along with a pointer to a current recipient node in the transmission route specification.

The embedded source processing element enqueues the delivery packet onto a packet interface of the embedded processing element (FIG. 9, block 190). In this process, the embedded source processing element selects a port of the source processing node corresponding to a current node on the transmission route. The packet interface transmits the delivery packet to the next hop address on the link out the selected port (FIG. 9, block 192).

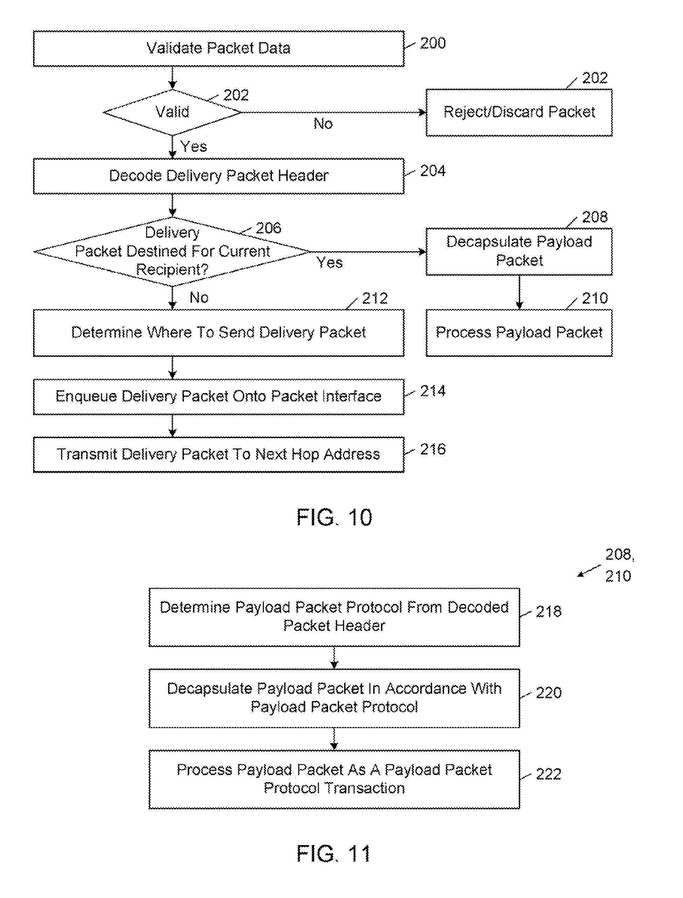

FIG. 10 is a flow diagram of an embodiment of a method by which an embedded processing element processes a transaction when operating as a recipient of a delivery packet (i.e., an embedded recipient processing element),

In response to receipt of a delivery packet, the embedded recipient processing element validates the packet data (FIG. 10, block 200). If the packet data is invalid (FIG. 10, block 202), the embedded recipient processing element either rejects or discards the delivery packet. If the packet data is valid (FIG. 10, block 202), the embedded recipient processing element decodes the delivery packet header (FIG. 10, block 204).

The embedded recipient processing element determines whether or not the delivery packet is destined for the current recipient (i.e., the embedded recipient processing element) (FIG. 10, block 206), In ID-based routing embodiments, the routing information in the decoded delivery packet header includes a destination address of the embedded processing element to which the delivery packet is destined. In these embodiments, the embedded recipient processing element determines whether or not it is the destination of the received delivery packet by determining whether or not the destination address matches the address of the embedded recipient processing element. In source-based routing embodiments, the embedded recipient processing element determines whether or not it is the destination of the received delivery packet by determining whether or not it corresponds to a destination node on the transmission route that is specified in the delivery packet header.

If the embedded recipient processing element is the destination for the delivery packet (FIG. 10, block 206), the embedded recipient processing element decapsulates the payload packet (FIG. 10, block 208) and processes the decapsulated payload packet (FIG. 10, block 210).

If the delivery packet is not destined for the embedded recipient processing element (FIG. 10, block 206), the embedded recipient processing element determines where to send the delivery packet (FIG. 10, block 212). In ID-based routing embodiments, the embedded recipient processing element applies the destination address as an input into a routing decision function for a routing table that is associated with the embedded recipient processing element to obtain a next hop address corresponding to another embedded processing element, which may be either a destination node or an intermediate node. The embedded recipient processing element encodes the next hop address into the delivery packet header. In source-based routing embodiments, the embedded recipient processing element determines the next hop address from the transmission route specification in the delivery packet header, where the next hop address typically is a port of the embedded recipient processing element.

The embedded recipient processing element enqueues the delivery packet onto a packet interface of the embedded recipient processing element (FIG. 10, block 214). The packet interface transmits the delivery packet to the next hop address (FIG. 10, block 216).

FIG. 11 is a flow diagram of an embodiment of a method by which an embedded destination processing element decapsulates and processes a delivery packet (FIG. 10, blocks 208, 210). In accordance with this embodiment, the embedded destination processing element determines the protocol in accordance with which the payload packet is encoded (FIG. 11, block 218). In some embodiments, the delivery packet includes an encoded identifier of the payload protocol. In these embodiments, the embedded destination processing element determines the payload protocol from the encoded identifier. The embedded destination processing element decapsulates the payload packet in accordance with the determined payload protocol (FIG. 11, block 220). The embedded destination processing element processes the decapsulated payload packet as a payload protocol transaction (FIG. 11, block 222). In some embodiments, this process involves consuming the payload packet. In other embodiments, the process involves transmitting the payload packet to a discrete or embedded I/O device.

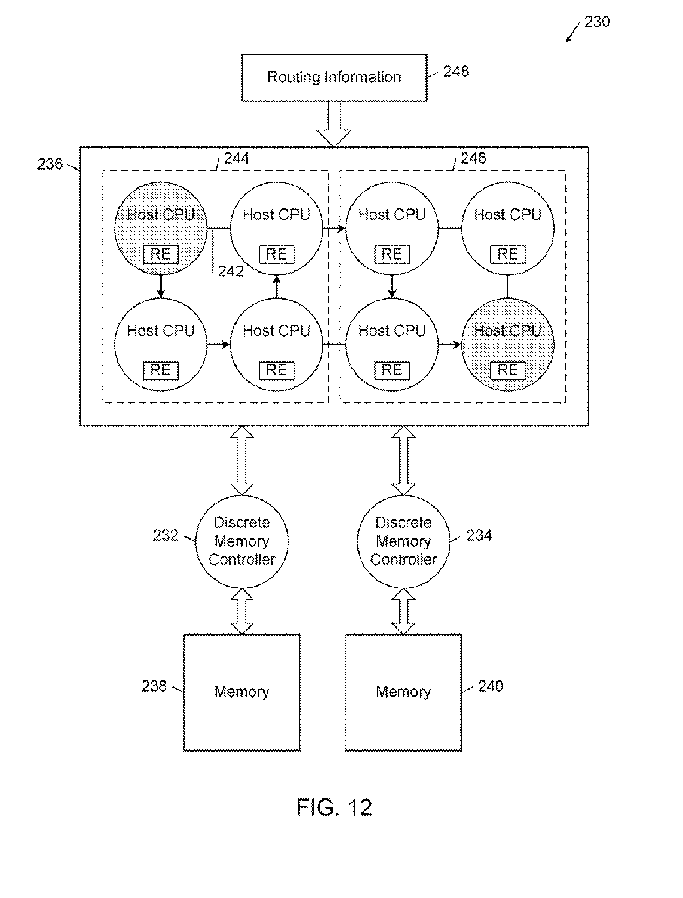

FIG. 12 shows an embodiment 230 of the multiprocessor computer system 10 that includes discrete memory controllers 232, 234 and a pool of CPUs 236. The memory controllers 232, 234 control accesses to respective memories 238, 240, each of which may, for example, be implemented multiple dual in-line memory module (DIMM) banks. Adjacent ones of the CPUs 236 are interconnected by direct links 242. The CPUs 236 also are segmented by software into two coherency domains 244, 246.

The CPUs 236 include respective routing engines (REs) that are programmed with routing information 248 that enables them to operate as sub-components of a dynamically reconfigurable distributed switch that is able to route delivery packets between the CPUs 236 over a variety of different paths through the links 242. (One exemplary path between the two CPUs highlighted gray is indicated by the solid line arrows in FIG. 12.) As described above, the routing engines (REs) route the delivery packets in accordance with a delivery protocol that encapsulates all types of data transmission protocols, including standard and proprietary protocols, without regard to the coherency of the protocols. In this way, CPUs 236 within the same coherency domain can route coherent protocol transactions (e.g., shared memory transactions) to each other, CPUs 236 in one of the coherency domains 244, 246 can route non-coherent packets for CPUs 236 in the other one of the coherency domains, and the CPUs 236 can route non-coherent I/O protocol transactions (e.g., (c)PCIe transactions) between the discrete memory controllers 232, 234 and other ones of the CPUs 236 all on the same links 242. In this process, each of the transactions is encapsulated into a respective delivery packet that is formatted in accordance with the delivery protocol and includes a respective delivery packet header that includes information for routing the delivery packet between connected ones of the processing elements based on routing tables respectively associated with the processing elements.

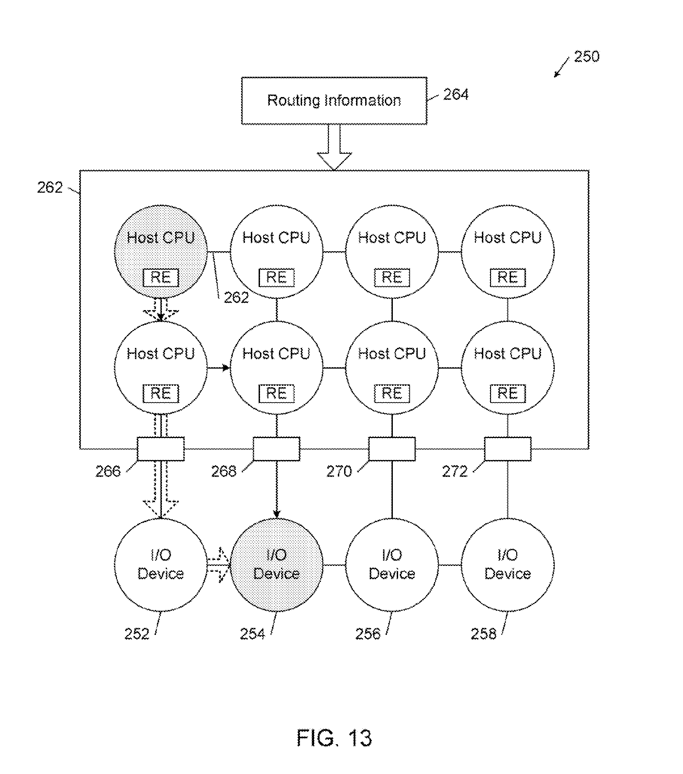

FIG. 13 shows an embodiment 250 of the multiprocessor computer system 10 that includes discrete I/O devices 252, 254, 256, 258 and a pool of CPUs 260, adjacent ones of which are interconnected by direct links 262. The CPUs 236 include respective routing engines (REs) that are programmed with routing information 264 that enables them to operate as sub-components of a dynamically reconfigurable distributed switch that is able to route delivery packets between the CPUs 262 over a variety of different paths through the links 262. (Two exemplary paths from the CPU highlighted gray to the I/O device 254 are indicated by the solid line arrows and the dashed line arrows, respectively.) As described above, the routing engines (REs) route the delivery packets in accordance with a delivery protocol that encapsulates all types of data transmission protocols, including standard and proprietary protocols, without regard to the coherency of the protocols. In this way, CPUs 262 within the same coherency domain can route coherent protocol transactions (e.g., shared memory transactions) to each other, CPUs 262 in one coherency domain can route non-coherent packets for CPUs 262 in the another coherency domain, and the CPUs 262 can route non-coherent I/O protocol transactions for other ones of the CPUs 262 all on the same links 262. In this process, each of the transactions is encapsulated into a respective delivery packet that is formatted in accordance with the delivery protocol and includes a respective delivery packet header that includes information for routing the delivery packet between connected ones of the processing elements based on routing tables respectively associated with the processing elements. In the illustrated embodiment, small platform component inserts 266, 268, 270, 272 remove delivery packet headers from the packets on behalf of the I/O devices 252-258.

### IV. CONCLUSION

The embodiments that are described herein provide improved systems and methods for handling communications across multiprocessing chip fabrics that enable platform design to be simplified, platform development cost and time to market to be reduced, and software and hardware reuse to be increased for improved flexibility, scale, and increased functionality. In these embodiments, embedded processing elements implement a dynamically reconfigurable distributed switch for routing transactions. In this way, external switches (e.g., crossbar switches and bus architectures) are not needed. Some of these embodiments leverage an encapsulation protocol that encapsulates standard and proprietary protocols without regard to the coherency of the protocols. In this way, the embedded processing elements can route transactions for different coherency domains, coherent protocol transactions (e.g., shared memory transactions), and non-coherent protocol transactions (e.g., I/O transactions) all on the same links.

Other embodiments are within the scope of the claims.

## Claims

1. A method performed by embedded physical processing elements (12-14) in a computer (10), the method comprising at a first one of the processing elements (14):
receiving a delivery packet (124) that is formatted in accordance with a delivery protocol and comprises an encapsulated payload packet (136) that is formatted in accordance with a payload protocol and a delivery packet header (134) comprising routing information;
determining from the routing information whether or not the delivery packet (124) is destined for the first processing element (14);
in response to a determination that the delivery packet (124) is not destined for the first processing element (14), sending the delivery packet (124) from the first processing element (14) to a second one of the processing elements based on the routing information; and
in response to a determination that the delivery packet (124) is destined for the first processing element (14), decapsulating the payload packet (136) from the delivery packet (124), and processing the decapsulated payload packet (136).

2. The method of claim 1 , wherein the routing information comprises a destination address of one of the processing elements (22) to which the delivery packet (124) is destined, and the determining comprises determining whether or not the destination address matches an address of the first processing element (14).

3. The method of claim 2, wherein in response to a determination that the destination address fails to match the address of the first processing element (14),
applying the destination address as an input into a routing decision function for a first routing table (119) associated with the first processing element (14) to obtain an address of the second processing element, and
the sending comprises sending the delivery packet (124) to the address of the second processing element

4. The method of any one of the preceding claims, wherein the routing information comprises a specification of a transmission route for the transmitting the delivery packet (124) across connected ones of the processing elements (12-14) from a source one of the processing elements (12) to a destination one of the processing elements (22), and the determining comprises determining whether or not the first processing element (14) corresponds to a destination node on the transmission route.

5. The method of claim 4, wherein in response to a determination that the first processing element (14) does not correspond to the destination node on the transmission route, the sending comprises selecting a port of the first processing element (14) corresponding to a current node on the transmission route and sending the delivery packet (124) on a link out the selected port

6. The method of any one of the preceding claims, further comprising:
at a second one of the processing elements, encapsulating the payload packet (136) into the delivery packet (124), wherein the encapsulating comprises obtaining routing information from a routing table (119) associated with the source processing element and encoding the routing information into the delivery packet header (134); and
transmitting the delivery packet (124) from the source processing element to the first processing element (14) based on the routing information.

7. The method of claim 6, wherein the encapsulating comprises obtaining from the routing table (119) a destination address of a destination one of the processing elements (22) to which the delivery packet (124) is destined and encoding the destination address into the delivery packet header (134); and
further comprising obtaining from the routing table (119) a next hop address corresponding to the first processing element (14); and
wherein the transmitting comprises transmitting the delivery packet (124) to the next hop address.

8. The method of claim 6, wherein the encapsulating comprises obtaining from the routing table (119) a specification of a transmission route for the transmitting the delivery packet (124) across connected ones of the processing elements (12-22) from a source one of the processing elements (12) to a destination one of the processing elements (22), and encoding the transmission route into the delivery packet header (134) along with a pointer to a current recipient node on the transmission route.

9. The method of any one of the preceding claims, wherein the delivery packet (124) comprises an encoded identifier (138) of the payload protocol; further comprising determining the payload protocol from the encoded identifier (138); and wherein the decapsulating comprises encapsulating the payload packet (136) in accordance with the determined payload protocol and the processing comprises processing the decapsulated payload packet (136) as a payload protocol transaction.

10. The method of any one of the preceding claims, further comprising programming each of the processing elements (12-22) with a respective routing engine (117) and an associated routing table (119), wherein each of the routing engines is operable to perform the receiving, the determining, the sending, the decapsulating, and the processing.

11. The method of any one of the preceding claims, wherein the receiving comprises receiving the delivery packet (124) on a link (36) that directly connects the first processing element 14 to a respective other one of the processing elements (12) without any intervening discrete devices, and the sending comprises sending the delivery packet (124) to the second processing element on a link that is directly connected between the first and second processing elements.

12. The method of any one of the preceding claims, further comprising routing coherent transactions and non -coherent transactions from respective source ones of the processing elements to respective destination ones of the processing elements, wherein the routing comprises encapsulating each of the transactions into a respective delivery packet (124) that is formatted in accordance with the delivery protocol and includes a respective delivery packet header (134) that includes information for routing the delivery packet (124) between connected ones of the processing elements based on routing tables respectively associated with the processing elements (12-22).

13. The method of any one of the preceding claims, further comprising routing transactions between a first group (244) of the processing elements in a first coherency domain and a second group (246) of the processing elements in a second coherency domain, wherein the routing comprises encapsulating each of the transactions into a respective delivery packet (124) that is formatted in accordance with the delivery protocol and includes a respective delivery packet header (134) that includes information for routing the delivery packet (124) between connected ones of the processing elements based on routing tables respectively associated with the processing elements (12-22).

14. A computer, comprising embedded physical processing elements (12-14) including a first one of the processing elements (14) operable to perform a method as claimed in any preceding claim.

15. A computer-readable medium having computer-readable program code (121) embodied therein, the computer-readable program code (121) adapted to be executed by at least one of multiple embedded physical processing elements (12-14) of a computer to implement a method as claimed in any of claims 1 to 13.

## Patentansprüche

1. Verfahren, das von eingebetteten physischen Verarbeitungselementen (12-14) in einem Computer (10) ausgeführt wird, wobei das Verfahren an einem ersten der Verarbeitungselemente (14) Folgendes umfasst:
Empfangen eines Zustellungspakets (124), das gemäß einem Zustellungsprotokoll formatiert ist und ein gekapseltes Nutzlastpaket (136), das gemäß einem Nutzlastprotokoll formatiert ist, und einen Zustellungspaket-Header (134), der Routing-Informationen umfasst, umfasst;
Bestimmen aus den Routing-Informationen, ob das Zustellungspaket (124) für das erste Verarbeitungselement (14) vorgesehen ist oder nicht;
als Reaktion auf eine Bestimmung, dass das Zustellungspaket (124) nicht für das erste Verarbeitungselement (14) vorgesehen ist, Senden des Zustellungspakets (124) von dem ersten Verarbeitungselement (14) an ein zweites der Verarbeitungselemente, basierend auf den Routing-Informationen; und
als Reaktion auf eine Bestimmung, dass das Zustellungspaket (124) für das erste Verarbeitungselement (14) vorgesehen ist, Entkapseln des Nutzlastpakets (136) aus dem Zustellungspaket (124) und Verarbeiten des entkapselten Nutzlastpakets (136).

2. Verfahren nach Anspruch 1, wobei die Routing-Informationen eine Zieladresse eines der Verarbeitungselemente (22) umfassen, für welches das Zustellungspaket (124) vorgesehen ist, und das Bestimmen das Bestimmen umfasst, ob die Zieladresse mit einer Adresse des ersten Verarbeitungselements (14) übereinstimmt oder nicht.

3. Verfahren nach Anspruch 2, wobei als Reaktion auf eine Bestimmung, dass die Zieladresse nicht mit der Adresse des ersten Verarbeitungselements (14) übereinstimmt,
Anwenden der Zieladresse als eine Eingabe in eine Routing-Entscheidungsfunktion für eine erste Routing-Tabelle (119), die mit dem ersten Verarbeitungselement (14) verknüpft ist, um eine Adresse des zweiten Verarbeitungselements zu erhalten, und
das Senden das Senden des Zustellungspakets (124) an die Adresse des zweiten Verarbeitungselements umfasst.

4. Verfahren nach einem der vorhergehenden Ansprüche, wobei die Routing-Informationen eine Vorgabe eines Übertragungswegs für die Übertragung des Zustellungspakets (124) über verbundene Elemente der Verarbeitungselemente (12-14) von einem Ursprungselement der Verarbeitungselemente (12) an ein Zielelement der Verarbeitungselemente (22) umfasst, und das Bestimmen das Bestimmen umfasst, ob das erste Verarbeitungselement (14) einem Zielknoten auf dem Übertragungsweg entspricht oder nicht.

5. Verfahren nach Anspruch 4, wobei als Reaktion auf eine Bestimmung, dass das erste Verarbeitungselement (14) nicht dem Zielknoten auf dem Übertragungsweg entspricht, das Senden das Auswählen eines Anschlusses des ersten Verarbeitungselements (14), das einem aktuellen Knoten auf dem Übertragungsweg entspricht, und das Senden des Zustellungspakets (124) auf einer Strecke von dem ausgewählten Anschluss aus umfasst.

6. Verfahren nach einem der vorhergehenden Ansprüche, ferner umfassend das Folgende:
an einem zweiten der Verarbeitungselemente Kapseln des Nutzlastpakets (136) in das Zustellungspaket (124), wobei das Kapseln das Erhalten von Routing-Informationen aus einer Routing-Tabelle (119), die mit dem ursprünglichen Verarbeitungselement verknüpft ist, und das Codieren der Routing-Informationen in den Zustellungspaket-Header (134) umfasst; und
Übertragen des Zustellungspakets (124) von dem ursprünglichen Verarbeitungselement an das erste Verarbeitungselement (14), basierend auf den Routing-Informationen.

7. Verfahren nach Anspruch 6, wobei das Kapseln das Erhalten aus der Routing-Tabelle (119) einer Zieladresse eines Zielelements der Verarbeitungselemente (22), für welches das Zustellungspaket (124) vorgesehen ist, und das Codieren der Zieladresse in den Zustellungspaket-Header (134) umfasst; und
ferner umfassend das Erhalten aus der Routing-Tabelle (119) einer nächsten Teilstreckenadresse, die dem ersten Verarbeitungselement (14) entspricht; und
wobei das Übertragen das Übertragen des Zustellungspakets (124) an die nächste Teilstreckenadresse umfasst.

8. Verfahren nach Anspruch 6, wobei das Kapseln das Erhalten aus der Routing-Tabelle (119) einer Vorgabe eines Übertragungswegs für die Übertragung des Zustellungspakets (124) über verbundene Elemente der Verarbeitungselemente (12-22) von einem Ursprungselement der Verarbeitungselemente (12) an ein Zielelement der Verarbeitungselemente (22) und das Codieren des Übertragungswegs in den Zustellungspaket-Header (134) zusammen mit einem Zeiger auf einen aktuellen Empfangsknoten auf dem Übertragungsweg umfasst.

9. Verfahren nach einem der vorhergehenden Ansprüche, wobei das Zustellungspaket (124) eine codierte Kennung (138) des Nutzlastprotokolls umfasst; ferner umfassend das Bestimmen des Nutzlastprotokolls aus der codierten Kennung (138); und wobei das Entkapseln das Entkapseln des Nutzlastpakets (136) gemäß dem bestimmten Nutzlastprotokoll umfasst, und das Verarbeiten das Verarbeiten des entkapselten Nutzlastpakets (136) als Transaktion des Nutzlastprotokolls umfasst.

10. Verfahren nach einem der vorhergehenden Ansprüche, ferner umfassend das Programmieren jedes der Verarbeitungselemente (12-22) mit einer jeweiligen Routing-Engine (117) und einer verknüpften Routing-Tabelle (119), wobei jede der Routing-Engines betriebsfähig ist, um das Empfangen, das Bestimmen, das Senden, das Entkapseln und das Verarbeiten auszuführen.

11. Verfahren nach einem der vorhergehenden Ansprüche, wobei das Empfangen das Empfangen des Zustellungspakets (124) auf einer Strecke (36) umfasst, die das erste Verarbeitungselement (14) mit einem jeweiligen anderen der Verarbeitungselemente (12) ohne dazwischenkommende separate Vorrichtungen direkt verbindet, und das Senden das Senden des Zustellungspakets (124) an das zweite Verarbeitungselement auf einer Strecke umfasst, die zwischen dem ersten und dem zweiten Verarbeitungselement direkt verbunden ist.

12. Verfahren nach einem der vorhergehenden Ansprüche, ferner umfassend das Leiten von kohärenten Transaktionen und nicht kohärenten Transaktionen von jeweiligen Ursprungselementen der Verarbeitungselemente zu jeweiligen Zielelementen der Verarbeitungselemente, wobei das Leiten das Kapseln jeder der Transaktionen in ein jeweiliges Zustellungspaket (124) umfasst, das gemäß dem Zustellungsprotokoll formatiert ist und einen jeweiligen Zustellungspaket-Header (134) umfasst, der Informationen zum Leiten des Zustellungspakets (124) zwischen verbundenen Elementen der Verarbeitungselemente basierend auf Routing-Tabellen, die jeweils mit den Verarbeitungselementen (12-22) verknüpft sind, umfasst.

13. Verfahren nach einem der vorhergehenden Ansprüche, ferner umfassend das Leiten von Transaktionen zwischen einer ersten Gruppe (244) der Verarbeitungselemente in einer ersten Kohärenzdomäne und einer zweiten Gruppe (246) der Verarbeitungselemente in einer zweiten Kohärenzdomäne, wobei das Leiten das Kapseln jeder der Transaktionen in ein jeweiliges Zustellungspaket (124) umfasst, das gemäß dem Zustellungsprotokoll formatiert ist und einen jeweiligen Zustellungspaket-Header (134) umfasst, der Informationen zum Leiten des Zustellungspakets (124) zwischen verbundenen Elementen der Verarbeitungselemente basierend auf Routing-Tabellen, die jeweils mit den Verarbeitungselementen (12-22) verknüpft sind, umfasst.

14. Computer, der eingebettete physische Verarbeitungselemente (12-14) umfasst, die ein erstes der Verarbeitungselemente (14) umfassen, das betriebsfähig ist, um ein Verfahren wie in einem vorhergehenden Anspruch beansprucht auszuführen.

15. Computerlesbares Medium, in dem ein computerlesbarer Programmcode (121) ausgebildet ist, wobei der computerlesbare Programmcode (121) dazu geeignet ist, von mindestens einem von mehreren eingebetteten physischen Verarbeitungselementen (12-14) eines Computers ausgeführt zu werden, um ein Verfahren wie in einem der Ansprüche 1-13 beansprucht umzusetzen.

## Revendications

1. Procédé réalisé par des éléments de traitement physiques intégrés (12-14) dans un ordinateur (10), le procédé comprenant au niveau d'un premier élément de traitement parmi les éléments de traitement (14) :
la réception d'un paquet de distribution (124) qui est formaté selon un protocole de distribution et comprend un paquet de données utiles encapsulé (136) qui est formaté selon un protocole de données utiles et un en-tête de paquet de distribution (134) comprenant des informations de routage ;
la détermination à partir des informations de routage du point de savoir si le paquet de distribution (124) est ou non destiné au premier élément de traitement (14) ;
en réponse à une détermination que le paquet de distribution (124) n'est pas destiné au premier élément de traitement (14), l'envoi du paquet de distribution (124) depuis le premier élément de traitement (14) vers un second élément de traitement parmi les éléments de traitement sur la base des informations de routage ; et
en réponse à une détermination que le paquet de distribution (124) est destiné au premier élément de traitement (14), la décapsulation du paquet de données utiles (136) à partir du paquet de distribution (124), et le traitement du paquet de données utiles décapsulé (136).

2. Procédé selon la revendication 1, dans lequel les informations de routage comprennent une adresse de destination de l'un des éléments de traitement (22) auquel le paquet de distribution (124) est destiné, et la détermination comprend la détermination du point de savoir si l'adresse de destination correspond ou non à une adresse du premier élément de traitement (14).

3. Procédé selon la revendication 2, dans lequel en réponse à une détermination que l'adresse de destination ne correspond pas à l'adresse du premier élément de traitement (14),
l'application de l'adresse de destination en tant qu'entrée dans une fonction de décision de routage pour une première table de routage (119) associée au premier élément de traitement (14) afin d'obtenir une adresse du second élément de traitement, et
l'envoi comprend l'envoi du paquet de distribution (124) à l'adresse du second élément de traitement.

4. Procédé selon l'une quelconque des revendications précédentes, dans lequel les informations de routage comprennent une spécification d'une route d'émission pour l'émission du paquet de distribution (124) à travers des éléments de traitement connectés parmi les éléments de traitement (12-14) depuis un élément de traitement source parmi les éléments de traitement (12) vers un élément de traitement de destination parmi les éléments de traitement (22), et la détermination comprend la détermination du point de savoir si le premier élément de traitement (14) correspond ou non à un noeud de destination sur la route d'émission.

5. Procédé selon la revendication 4, dans lequel en réponse à une détermination que le premier élément de traitement (14) ne correspond pas au noeud de destination sur la route d'émission, l'envoi comprend la sélection d'un port du premier élément de traitement (14) correspondant à un noeud courant sur la route d'émission et l'envoi du paquet de distribution (124) sur une liaison en sortie du port sélectionné.

6. Procédé selon l'une quelconque des revendications précédentes, comprenant en outre :
au niveau d'un second élément de traitement parmi les éléments de traitement, l'encapsulation du paquet de données utiles (136) dans le paquet de distribution (124), l'encapsulation comprenant l'obtention d'informations de routage à partir d'une table de routage (119) associée à l'élément de traitement source et le codage des informations de routage dans l'en-tête de paquet de distribution (134) ; et
l'émission du paquet de distribution (124) depuis l'élément de traitement source vers le premier élément de traitement (14) sur la base des informations de routage.

7. Procédé selon la revendication 6, dans lequel l'encapsulation comprend l'obtention à partir de la table de routage (119) d'une adresse de destination d'un élément de traitement de destination parmi les éléments de traitement (22) auquel le paquet de distribution (124) est destiné et le codage de l'adresse de destination dans l'en-tête de paquet de distribution (134) ; et
comprenant en outre l'obtention à partir de la table de routage (119) d'une adresse de saut suivant correspondant au premier élément de traitement (14) ; et
dans lequel l'émission comprend l'émission du paquet de distribution (124) à l'adresse de saut suivant.

8. Procédé selon la revendication 6, dans lequel l'encapsulation comprend l'obtention à partir de la table de routage (119) d'une spécification d'une route d'émission pour l'émission du paquet de distribution (124) à travers des éléments de traitement connectés parmi les éléments de traitement (12-22) depuis un élément de traitement source parmi les éléments de traitement (12) vers un élément de traitement de destination parmi les éléments de traitement (22), et le codage de la route d'émission dans l'en-tête de paquet de distribution (134) avec un pointeur vers un noeud de destinataire courant sur la route d'émission.

9. Procédé selon l'une quelconque des revendications précédentes, dans lequel le paquet de distribution (124) comprend un identificateur codé (138) du protocole de données utiles ; comprenant en outre la détermination du protocole de données utiles à partir de l'identificateur codé (138) ; et dans lequel la décapsulation comprend l'encapsulation du paquet de données utiles (136) selon le protocole de données utiles déterminé et le traitement comprend le traitement du paquet de données utiles décapsulé (136) en tant que transaction de protocole de données utiles.

10. Procédé selon l'une quelconque des revendications précédentes, comprenant en outre la programmation de chacun des éléments de traitement (12-22) avec un moteur de routage respectif (117) et une table de routage associée (119), chacun des moteurs de routage étant fonctionnel pour réaliser la réception, la détermination, l'envoi, la décapsulation et le traitement.

11. Procédé selon l'une quelconque des revendications précédentes, dans lequel la réception comprend la réception du paquet de distribution (124) sur une liaison (36) qui connecte directement le premier élément de traitement (14) à un autre élément de traitement respectif parmi les éléments de traitement (12) sans une quelconque intervention de dispositifs discrets, et l'envoi comprend l'envoi du paquet de distribution (124) au second élément de traitement sur une liaison qui est directement connectée entre les premier et second éléments de traitement.

12. Procédé selon l'une quelconque des revendications précédentes, comprenant en outre le routage de transactions cohérentes et de transactions non cohérentes depuis des éléments de traitement sources respectifs parmi les éléments de traitement vers des éléments de traitement de destination respectifs parmi les éléments de traitement, le routage comprenant l'encapsulation de chacune des transactions dans un paquet de distribution respectif (124) qui est formaté selon le protocole de distribution et comprend un en-tête de paquet de distribution respectif (134) qui comprend des informations pour le routage du paquet de distribution (124) entre des éléments de traitement connectés parmi les éléments de traitement sur la base de tables de routage respectivement associées aux éléments de traitement (12-22).

13. Procédé selon l'une quelconque des revendications précédentes, comprenant en outre le routage de transactions entre un premier groupe (244) des éléments de traitement dans un premier domaine de cohérence et un second groupe (246) des éléments de traitement dans un second domaine de cohérence, le routage comprenant l'encapsulation de chacune des transactions dans un paquet de distribution respectif (124) qui est formaté selon le protocole de distribution et comprend un en-tête de paquet de distribution respectif (134) qui comprend des informations pour le routage du paquet de distribution (124) entre des éléments de traitement connectés parmi les éléments de traitement sur la base de tables de routage respectivement associées aux éléments de traitement (12-22).

14. Ordinateur, comprenant des éléments de traitement physiques intégrés (12-14) comprenant un premier élément de traitement parmi les éléments de traitement (14) fonctionnel pour réaliser un procédé tel que revendiqué dans une quelconque revendication précédente.

15. Support lisible par ordinateur ayant un code de programme lisible par ordinateur (121) incorporé dans celui-ci, le code de programme lisible par ordinateur (121) étant conçu pour être exécuté par au moins l'un de multiples éléments de traitement physiques intégrés (12-14) d'un ordinateur pour mettre en oeuvre un procédé tel que revendiqué dans l'une quelconque des revendications 1 à 13.
